# EUROPEAN PATENT SPECIFICATION

(11) **EP 3 472 078 B1**
(45) Date of publication and mention of the grant of the patent: **23.12.2020**
(21) Application number: 17749515.7
(22) Date of filing: 20.06.2017
(51) Int. Cl.: B65G 57/03, B65B 11/00, B65B 35/52, B65B 59/02, B65B 35/50

(54) **MACHINE AND METHOD FOR WRAPPING PRODUCTS**
MASCHINE UND VERFAHREN ZUM UMHÜLLEN VON PRODUKTEN
MACHINE ET PROCÉDÉ D'EMBALLAGE DE PRODUITS

(30) Priority: 21.06.2016 IT UA20164557
(43) Date of publication of application: 24.04.2019
(73) Proprietor: AETNA GROUP S.p.A., 47826 Verucchio (RN) (IT)
(72) Inventor: CERE', Mauro, 40050 Loiano (BO) (IT)
(74) Representative: Cicconetti, Andrea
(86) International application number: PCT/IB2017/053648
(87) International publication number: WO 2017/221140

(56) References cited:
- WO-A1-2009/109218
- WO-A1-2010/059923
- WO-A1-2010/131945
- DE-A1-102007 016 727
- DE-U1- 20 211 672

## Description

The invention relates to machines and methods for wrapping products with plastic film and, in particular, refers to a machine and a method for wrapping with a cold stretchable plastic film a group of irregular shaped and/or unstable and/or difficult-to-stack products, arranged on a pallet.

The known wrapping machines generally include an unwinding unit which houses and supports a film reel and moving means that supports and moves said wrapping unit. The film is unwrapped from the reel and is wrapped around the load in order to form a series of strips or bands that are interwoven by the combination of a movement of the unwinding unit in a vertical direction and relative rotation between the unwinding unit and the load.

In the wrapping machines equipped with rotating tables, the moving means comprises a strut or column along which a carriage moves vertically that supports the unwinding unit. The load is positioned on the rotating table and rotates with the latter about a vertical wrapping axis.

In the wrapping machines with horizontal rotating ring or rotating arm, the load remains static during wrapping, while the unwinding unit is moved relatively to the load, both rotating about the vertical wrapping axis and translating along the latter. In the wrapping machines with horizontal rotating ring, the moving means comprises a rotating ring that supports the unwinding unit and which, in addition to rotating around the wrapping axis, moves vertically and in parallel to the latter. In the wrapping machines with rotating arm, the moving means comprise a vertical arm that rotates about the wrapping axis, along which the unwinding unit can be moved.

The unwinding unit, in addition to receiving and supporting the film reel, is generally equipped with a couple of pre-stretching rollers, which unwind the film from the reel and stretch or elongate it, and one or more return rollers that divert the film towards the product or group of products.

The wrapping machines known and described above wrap groups of products or objects that assume a stable composition or formation on the pallet, that is products or objects that can be stacked and/or overlapped in a stable manner even before wrapping. WO 2009/109218 A1 also discloses a wrapping machine according to preamble of claim 1.

In the case of products, articles, objects, etc. having instead an irregular or variable shape and/or with a low consistency or compactness, that is products that cannot be stacked or overlapped on a pallet, the known wrapping machines cannot be used in automatic wrapping mode. It is indeed necessary to employ one or more operators proceeding in successive phases to gradually and progressively stack the products while the latter ones are wrapped with the plastic film.

This method of wrapping, in addition to requiring the manual intervention of one or more operators, is particularly long and laborious and significantly reduces the productivity of the wrapping machine.

An object of this invention is to improve the known machines and methods for wrapping groups of products on pallets with a stretchable plastic film, in particular, groups of products, articles, items, objects that are unstable, with irregular or variable shapes and/or dimensions, and/or low compactness and/or consistency such that they are difficult to stuck and/or overlap.

Another object is to provide a machine and a wrapping method that allow to wrap with a plastic film groups of products or objects that are unstable and/or difficult to stack and/or overlap, in a safe and stable manner, automatically, on pallets, without the manual intervention of operators and without requiring complex and laborious machine adjustment and/or configuration operations.

A further object is to provide a machine and a wrapping method that allow stable and firm wrapping of groups of unstable and/or difficult-to-stack and/or to-overlap products, operating at high speeds to increase productivity compared with the known wrapping machines and methods.

In a first aspect of the invention, a machine is envisaged for wrapping a plurality of products with a plastic film according to claim 1.

In a second aspect of the invention, a method is envisaged for wrapping a plurality of products with a film according to claim 12.

The invention can be better understood and implemented with reference to the accompanying drawings that illustrate an exemplary and not limiting embodiment, wherein:
- Figure 1 is a schematic front and partially sectioned view of the wrapping machine of the invention associated with a plurality of products to be grouped, stacked and wrapped on a pallet in one operational phase.
- Figure 2 is a schematic plan view of the wrapping machine in figure 1.

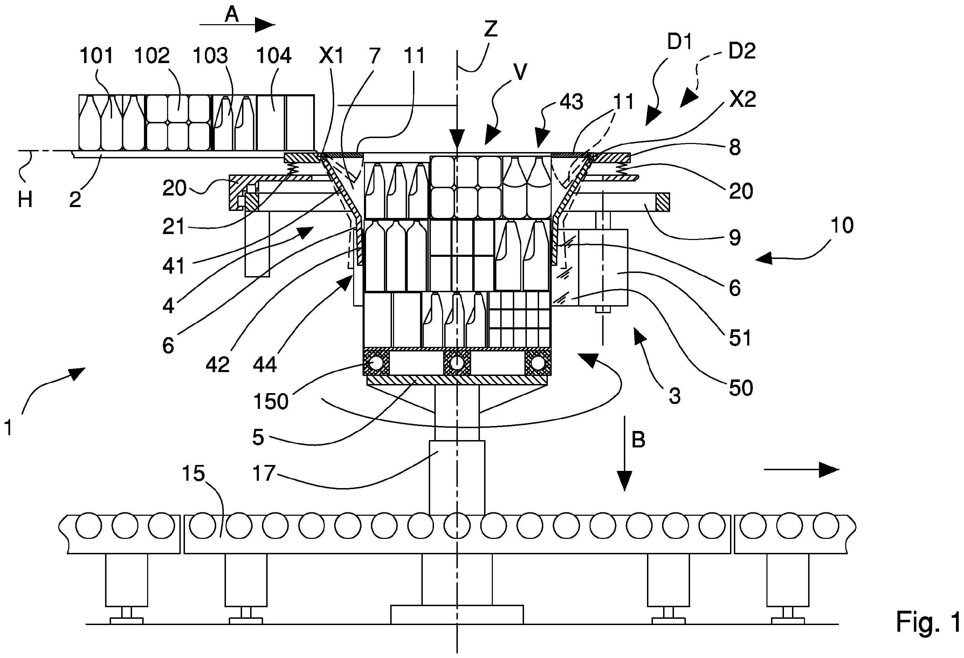

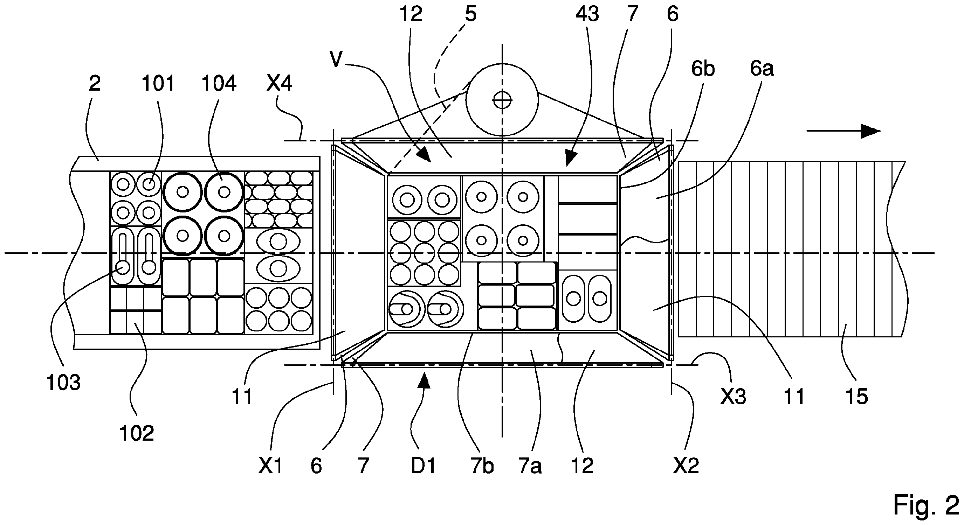

With reference to figures 1 and 2, a wrapping machine 1 is illustrated according to the invention, arranged for wrapping a film 50 of cold extensible plastic material around a plurality of products 101, 102, 103, 104, previously arranged in groups, stacked and overlapped on a pallet 150.

The wrapping machine 1 comprises first moving means 2 for conveying a plurality of products 101, 102, 103, 104, separated from one another, on a movement plane H and along a first direction A. The products are items or objects that have irregular or variable shapes and/or dimensions and/or have low consistency or compactness, that is the products cannot be stacked or overlapped in a stable manner on pallets and comprise, as illustrated by way of example, heterogeneous groups of single or grouped items such as bottle packs 101, packaging for jars 102, vials 103, cans 104, etc. or may include sacks, bags, or sachets of products or items.

The first moving means 2 includes, for example, a conveyor belt, of a known type and not described in detail, which forms a support plane for the products that is coplanar to the movement plane H.

The wrapping machine 1 comprises wrapping means 3 for wrapping the film 50 around the products 101, 102, 103, 104, when stacked and overlapped on a respective pallet 150, and grouping means 4 designed to receive the products 101, 102, 103, 104 from the first moving means 2 and to arrange and maintain the products 101, 102, 103, 104 stacked and overlapped along a second direction B on the pallet 150.

The second direction B is substantially orthogonal to the movement plane H and the first direction A.

The products 101, 102, 103, 104 are stacked to form overlapping layers, each layer comprising at least one product 101, 102, 103, 104, or at least one row of products 101, 102, 103, 104. In the example illustrated in the figures, the products are fed by the first moving means 2 according to a series of joined rows and then stacked and overlapped within the grouping means 4, forming a plurality of layers, each of which comprises a plurality of products arranged in multiple joined rows, each row including one or more products.

The wrapping machine 1 also comprises a supporting platform 5 adapted to support the pallet 150, and the products stacked on it, and is movable in a wrapping phase along the second direction B so as to progressively extract and disengage, from the grouping means 4, the stacked and overlapped products 101, 102, 103, 104 and allow them to be wrapped by the film 50 dispensed by the wrapping means 3, as explained in more detail in the description below.

The grouping means comprises a hopper 4, provided with an upper portion 41, with an upper opening 43 for the input of the products 101, 102, 103, 104 and converging toward an underlying lower portion 42. The latter forms a grouping volume V and is arranged to contain and support the products 101, 102, 103, 104 received from the first moving means 2 and progressively stacked and overlapped along the second direction B. The lower portion 42 is equipped with a lower opening 44 that allows the output of the products 101, 102, 103, 104 along the second direction B.

The upper opening 43 of the hopper 4 is substantially coplanar to the movement plane H so that the products conveyed by the first moving means 2 can be pushed and positioned over a layer of products previously introduced into the hopper 4.

The hopper 4 is formed of a plurality of side walls 6, 7, which form the upper portion 41 and the lower portion 42. In particular, in the illustrated embodiment, the hopper 4 comprises a couple of opposed first side walls 6 and a couple of opposed second side walls 7, the first side walls 6 being substantially orthogonal to the second side walls 7. The side walls 6, 7 comprise respective first parts 6a, 7a, which are inclined with respect to the second direction B, and arranged to form the upper portion 41 and the respective second parts 6b, 7b substantially parallel to the second direction B and arranged to form the lower portion 42. The first side walls 6 are of a shorter length than the second side walls 7; therefore, the upper opening 43 and the lower opening 44 have substantially rectangular shape.

The side walls 6, 7 are movable to adjust the grouping volume V carried out by the hopper 4 according to dimensions and/or size and/or shapes of the products 101, 102, 103, 104 and/or the dimensions of the underlying pallet 150.

In the illustrated embodiment, each side wall 6, 7 is fixed to a support element 8 of the hopper 4 in order to rotate, particularly by an angle comprised between 5° and 20°, and more specifically between 10° and 15°, about a respective axis X1, X2, X3, X4, substantially parallel to the movement plane H. In particular, the first side walls 6 rotate about respective first axes X1, X2, while the second side walls 7 rotate about respective seconds axis X3, X4. The first axes X1, X2 are substantially orthogonal to the first direction A, while the second axes X3, X4 are parallel to the latter.

The support element 8 of the hopper 4, which substantially forms a rectangular flange or cornice, is elastically mounted, for example by means of a plurality of elastic elements 21, on a supporting frame 20 of the wrapping machine 1, in order to allow the hopper 4 small movements along the second direction B, to enable the input of the products into the latter. The elastic elements 21 comprise, for example, compression-coiled helical springs.

In one variant of the wrapping machine 1 of the invention not illustrated in the figures, the couples of side walls 6, 7 are slidably connected to the supporting element 8 of the hopper 4, so they result to be movable along two respective adjustment directions that are orthogonal to one another and parallel to the movement plane H. In particular, the first side walls 6 are movable along a first adjustment direction parallel to the first direction A, while the second side walls 7 are movable along a second adjustment direction orthogonal to the first direction A.

The side walls 6, 7 are slidably connected to the support element 8 by means of a plurality of elastic elements, so they can be moved elastically along the two adjustment directions, to enable the input of the products into the hopper 4.

Adjusting the position of the side walls 6, 7 along the two adjustment directions and with respect to the support element 8 can also be manually performed by an operator, as a function of the dimensions and/or size and/or shapes of the products 101, 102, 103, 104 and/or the dimensions of the underlying pallet 150.

The hopper 4 further comprises a plurality of panels 11, 12 that are connected to the respective side walls 6, 7 at the upper portion 41 of the hopper 4 and movable between a first operating position D1 in which the panels 11, 12 are arranged substantially parallel to the movement plane H in order to reduce a passage section of the upper opening 43, and a second operating position D2 in which they are adjacent and overlapped to the respective side walls 6, 7, so as not to vary the dimensions of the passage section of the upper opening 43.

Each panel 11, 12 is fixed to the support element 8 of the hopper 4, in order to rotate about a respective axis substantially parallel to the movement plane H.

With reference to the assembly method illustrated in the figures, the hopper 4 is provided with a couple of first panels 11 opposed to one another and fixed to their respective first side walls 6 and a couple of second panels 12 opposed to one other and fixed to their respective second side walls 12. In the second operating position D2, the panels 6, 7 overlap the respective inclined first parts 6a, 7a of the side walls 6, 7.

The supporting platform 5 is moved along the second direction B by the operating means 17, comprising, for example, a telescopic, electric, pneumatic or hydraulic lifting column, capable of moving the supporting platform 5 between a collection position in which said supporting platform 5 is raised within the hopper 4 to receive a first group of products from the first moving means 2, for placement on the pallet 150 to form a first layer, and a release position in which said supporting platform 5 is lowered to deposit the pallet 150 with the products stacked and wrapped in film 50 on second moving means 15.

The latter ones comprise a respective conveyor 15, of a known type and not described in detail, which is able to receive the pallet 150 with the products wrapped with the film 50 and convey it out of the machine 1.

The wrapping means 3 comprises an unwinding unit 10 that supports a reel 51 of the film 50 and is supported and rotated about a wrapping axis Z, substantially parallel to the second direction B by rotating means 9. The latter includes, in the illustrated embodiment, a support ring 9 pivotally fixed to the support frame 20 of the wrapping machine 1 and rotatable about the wrapping axis Z.

The unwinding unit 10 also comprises a couple of pre-stretch rollers, which are motorised and able to unwind and pre-stretch the film 50 and one or more diverting rollers for diverting the film 50 toward the pre-stretch rollers and towards the products on the pallet 150.

The pre-stretch rollers comprise a first fast roller placed downstream of a second slow roller in such a way as to stretch or elongate (depending on the difference in the rotational speeds between the two rollers) the film 50 by an determined percentage.

The wrapping means 3 is positioned to wrap the film 50 also around the lower portion 42 of the hopper 4 at the lower opening 44 of the hopper, in such a way as to guide and properly contain the products while emerging from the hopper 4. In particular, the unwinding unit 10 is positioned so that at least 15-35% of the band height of the film 50 is wrapped onto the hopper 4.

The operation of the wrapping machine 1 of the invention provides that the products 101, 102, 103, 104 to be stacked on a pallet 150 and wrapped with the film 50 are conveyed separately towards the grouping means 4 by means of the first moving means 2.

The products 101, 102, 103, 104 having irregular or variable shapes and/or dimensions and comprising heterogeneous groups of single or grouped items, such as bottle packs 101, packaging of jars 102, vials 103, cans 104, are positioned on the moving means 2 according to a series of joined rows.

In an initial phase of the procedure of grouping and wrapping the products , the supporting platform 5 is arranged in the collection position so that an upper plane of the pallet 150 is substantially aligned and coplanar to the movement plane H, in order to receive a first group of products 101, 102, 103, 104, appropriately arranged and compacted along the first moving means 2, said first product group 101, 102, 103, 104 forming the first layer of products to be stacked and overlapped on the pallet 150.

In the illustrated example, the hopper panels 11, 12 of the hopper 4 are arranged in the first operating position D1 to reduce the passage section of the upper opening 43. The latter substantially corresponds to the shape and size of the pallet 150 and the group of products.

Alternatively, and typically in the case of products with a poor consistency or compactness, or with an undefined shape, such as bags, sacks, sachets and similar, the panels 11, 12 of the hopper 4 are arranged in the second operating position D2, that is, adjacent and overlapped to the respective side walls 6, 7, so as not to vary the dimensions of the passage section of the upper opening 43 and substantially serving as a slide in the converging upper portion 41 of the hopper 4, to convey the products within the grouping volume V of the lower portion 42. In this case, the supporting platform 5 can be arranged in a collection position wherein the upper plane of the pallet 150 is lower than the movement plane H, for example arranged at a junction zone between the upper portion 41 and the lower portion 42 of the hopper 4.

Once the first group of products is positioned on the pallet 150, the supporting platform 5 is lowered along the second direction B to allow the positioning of a second group of products fed by the first moving means 2 and forming the second layer of products on the pallet 150.

During the descent of the supporting platform 5, the converging upper portion of the hopper 4 guides and directs the products placed on the pallet 150 to within the lower portion 42 which ensures said products remain in position, adequately compacted. Thanks to the movable side walls 6, 7, in particular rotatable about the respective X1, X2, X3, X4 axes by approximately 10-15°, the grouping volume V formed by the lower portion 42 varies according to the actual size of the products deposited on the pallet.

Before wrapping begins, the position of the side walls 6, 7 can be adjusted manually by an operator with respect to the support element 8, depending on the dimensions and/or size and/or shapes of the products 101, 102, 103, 104 and/or the dimensions of the underlying pallet 150.

The product loading sequence is repeated, gradually lowering the supporting platform 5 until the loading of products on the pallet 150 is completed.

When the pallet 150 begins to exit the hopper 4, the wrapping means 3 is activated in order to wrap the film 50 around the pallet 150 and around the products exiting the lower opening 44 of the hopper 4.

It should be noted that the film 50 is partially wrapped around the lower portion 42 of the hopper 4 at the lower opening 44 (so that at least 15-35% of the band height of the film 50 is wound onto the hopper), thus keeping the side walls 6, 7 of the hopper 4 abutting the products, exerting a containment force substantially generated by the wrapping force of the film 50. Said force depends on the percentage of elongation or pre-stretching to which the film 50 is subjected by the rollers, on the unwinding speed of the film from the reel 51 and on the rotating speed of the unwinding unit 10.

Once the desired load or quantity of products, properly wrapped with the film 50, is placed on the pallet 150, the dispensing of the film 50 is stopped by the unwinding unit 10 and the supporting platform 5 is lowered to the release position in order to deposit the pallet 150 with the stacked and wrapped products on the second moving means 15.

A new pallet 150 is then positioned on the supporting platform 5, which is raised to the collection position for a new product grouping and winding sequence.

The method according to the invention for wrapping with a film 50 a plurality of products 101, 102, 103, 104, stacked and overlapped on a pallet 150 using the wrapping machine 1 illustrated in Figures 1 and 2 and described above, comprises the phases:
- conveying the separated products 101, 102, 103, 104 by the first moving means 2 along the first direction A on the movement plane H;
- introducing the products 101, 102, 103, 104 into the grouping means 4.
- arranging and maintaining the products 101, 102, 103, 104 stacked and overlapped along the second direction B on the pallet 150 by means of the grouping means 4.
- moving the pallet 150 supported by the supporting platform 5, which is movable along the second direction B, so as to progressively extract and disengage the stacked and overlapped products 101, 102, 103, 104 from the grouping means 4; and
- wrapping with the film 50 the stacked and overlapped products 101, 102, 103, 104 while they progressively come out from the grouping means 4.

The method also involves wrapping with the film 50 the lower portion 42 of the grouping means 4 at the lower opening 44 thereof, through which the products 101, 102, 103, 104come out, in particular so that at least 15-35% of the band height of the film 50 is wrapped on said lower portion 42 in order to maintain the side walls 6, 7 of the grouping means 4 abutted with the products, exerting a containing force which is substantially achieved by the wrapping force of the film 50.

The products 101, 102, 103, 104 are stacked on the pallet 150according to overlapped layers, each layer comprising at least one product 101, 102, 103, 104, or at least one row of products 101, 102, 103, 104.

Once the wrapping of the film is completed, the method involves placing on the second moving means 15 the desired load or group of products 101, 102, 103, 104 stacked and overlapped on the pallet 150 and wrapped with the film 50.

Thanks to the machine and the wrapping method of the invention, it is then possible to wrap with a plastic film groups of products, articles, items, unstable objects having irregular or variable shapes or dimensions, low compactness and/or consistency and so difficult to stack and/or overlap in a safe and stable manner on a pallet, and automatically, without the manual assistance of operators and without requiring complex and laborious processes of adjustment and/or configuration of the wrapping machine.

The grouping means, including a hopper 4 provided with side walls 6, 7, in fact enables the products fed by the first moving means to be received and grouped individually and separately. More precisely, the hopper 4 arranges and ensures the products remain stacked and overlapped along the second direction B on the pallet 150, so as to form a plurality of layers while the film 50 is wrapped around the products exiting from the hopper.

The wrapping force of the film 50 is used to keep the stacked products compact and stable, since the film is partially wrapped on the lower portion 42 of the hopper 4, at the lower opening 44. More specifically, the film 50 keeps the side walls 6, 7 (swivelling around the respective axes) of the hopper 4 abutting the products by exerting a of containing and stabilizing force.

Since the side walls 6, 7 of the hopper 4 are movable, it is also possible to automatically vary the grouping volume V made by the hopper 4, according to the dimensions and/or size and/or shapes of the products 101, 102, 103, 104, which are introduced without the need for adjustments and/or modifications to the machine.

Alternatively, the position of the movable side walls 6, 7 of the hopper 4 can be adjusted manually with respect to the support element 8, for example along two directions of alignment, respectively parallel and orthogonal to the first direction A, depending on the dimensions and/or size and/or shapes of the products 101, 102, 103, 104 and/or the dimensions of the pallet 150.

The wrapping means 3 of the wrapping machine of the invention enables adherent and stable wrapping of unstable products, because the unwinding unit 10 is provided with motorised pre-stretch rollers which vary the unwinding speed of the film 50 and the extent of stretching or elongation (percentage of pre-stretching) of the plastic film. Additionally, the unwinding unit 10 mounted on the support ring 9, which can be rotated about the winding axis Z even at high speeds, allows the wrapping machine to have a higher level of productivity than other known machines.

## Claims

1. Wrapping machine (1) for wrapping a plurality of products (101, 102, 103, 104) with a film (50), wherein the products are stacked and overlapped on a pallet (150), comprising:
- first moving means (2) for conveying a plurality of separated products (101, 102, 103, 104) on a movement plane (H) along a first direction (A).
- wrapping means (3) for wrapping said film (50) around said products (101, 102, 103, 104), when stacked and overlapped on a pallet (150);
- grouping means (4) designed to receive said products (101, 102, 103, 104) from said first moving means (2) and arranging and maintaining said products (101, 102, 103, 104) stacked and overlapped along a second direction (B) on said pallet (150).
- a supporting platform (5), designed to support said pallet (150) and movable in a wrapping phase along said second direction (B) so as to extract and disengage said products from said grouping means (4) stacked and overlapped in order to allow the latter ones to be wrapped by the film (50) dispensed by the wrapping means (3).
**characterised by** the fact that said grouping means comprises a hopper (4) provided with an upper portion (41), having an upper opening (43) for the input of said products (101, 102, 103, 104) and converging towards an underlying lower portion(42), the latter forming a grouping volume (V) and arranged to contain and support said products (101, 102, 103, 104) progressively stacked and overlapped along said second direction (B), said lower portion (42) having a lower opening (44) for the output of said products (101, 102, 103, 104) arranged on said pallet (150), said hopper (4) comprising a plurality of side walls (6, 7), forming said upper portion (41) and said lower portion (42), which are movable to adjust said grouping volume (V) according to dimensions and/or size and/or shapes of said products (101, 102, 103, 104) and/or dimensions of said pallet (150).

2. Machine according to claim 1, wherein said upper opening (43) of said hopper (4) is substantially coplanar to said movement plane (H).

3. Machine according to claim 1 or 2, wherein said plurality of side walls (6, 7) include a couple of opposed first side walls (6) and a couple of opposed second side walls (7), in particular said first side walls (6) being substantially orthogonal to said second side walls (7).

4. Machine according to any preceding claim, wherein said side walls (6, 7) comprise respective first parts (6a, 7a) which are inclined with respect to said second direction (B) and arranged to form said upper portion (41) and respective second parts (6b, 7b) which are substantially parallel to said second direction (B) and arranged to form said lower portion (42).

5. Machine according to any preceding claim, wherein each side wall (6, 7) is fixed to a support element (8) of said hopper (4) in order to rotate, particularly by an angle between 5° and 20°, about a respective axis (XI, X2, X3, X4), the latter being in particular substantially parallel to said movement plane (H).

6. Machine according to any preceding claim, wherein said hopper (4) comprises a plurality of panels (11, 12) that are connected to said side walls (6, 7) of said hopper (4) at said upper portion (41) and movable between a first operating position (D1), in which said panels (11, 12) are arranged substantially parallel to said movement plane (H) in order to reduce a passage section of said upper opening (43), and a second operating position (D2), in which said panels (11, 12) are adjacent and overlapped to the respective side walls (6, 7) so as not to reduce said passage section of said upper opening (43).

7. Machine according to claim 6, wherein each panel (11, 12) is fixed to a support element (8) of said hopper (4) in order to rotate about a respective axis, which is in particular substantially parallel to said movement plane (H).

8. Machine according to any preceding claim, wherein said wrapping means (3) is arranged to wrap said film (50) around a lower portion (42) of said grouping means (4) at said lower opening (44) of the latter ones.

9. Machine according to any preceding claim, wherein said wrapping means (3) comprises an unwinding unit (10) which supports at least one reel (51) of said film and is supported and rotated about a wrapping axis (Z), in particular parallel to said second direction (B), by rotating means (9).

10. Machine according to any preceding claim, comprising second moving means (15), in particular positioned under said grouping means (4), arranged to receive said plurality of products (101, 102, 103, 104), stacked and overlapped on said pallet (150) and wrapped with said film (50) exiting from said grouping means (4) and convey said products (101, 102, 103, 104) exiting from said machine (1).

11. Machine according to any preceding claim, wherein said second direction (B) is substantially orthogonal to said movement plane (H).

12. Method for wrapping a plurality of products (101, 102, 103, 104) with a film (50), wherein the products are stacked and overlapped on a pallet (150), using a wrapping machine (1) according to any preceding claim, comprising:
- conveying said separated products (101, 102, 103, 104) by first moving means (2) along a first direction (A) on a movement plane (H);
- introducing said products (101, 102, 103, 104) into grouping means (4);
- arranging and maintaining said products (101, 102, 103, 104) stacked and overlapped along a second direction (B) on a pallet (150) by means of said grouping means (4);
- moving said pallet (150) supported by a supporting platform (5), which is movable along said second direction (B), so as to progressively extract and disengage said stacked and overlapped products (101, 102, 103, 104) from said grouping means (4); and
- wrapping said stacked and overlapped products (101, 102, 103, 104) with said film (50) while they progressively come out from the grouping means (4).

13. Method according to claim 12, wherein said wrapping with said film (50) comprises wrapping also a lower portion (42) of said grouping means (4) at a lower opening (44) thereof, by means of which said products (101, 102, 103, 104) come out, in particular so that at least 15% to 35% of band height of said film (50) is wrapped around said lower portion (42) in order to maintain side walls (6, 7) of said grouping means (4) abutted with said products (101, 102, 103, 104), exerting a containing force which is substantially accomplished by a wrapping force of said film (50).

14. Method according to claim 12 or 13, wherein said products (101, 102, 103, 104) are stacked according to overlapped layers, each layer comprising at least one product (101, 102, 103, 104) or at least one row of products (101, 102, 103, 104).

15. Method according to claim 14 comprising, after said wrapping, placing said plurality of products (101, 102, 103, 104), which are stacked and overlapped on said pallet (150) and wrapped with said film (50), on second moving means (15).

## Patentansprüche

1. Verpackungsmaschine (1) zum Verpacken einer Mehrzahl von Produkten (101, 102, 103, 104) mit einem Film (50), wobei die Produkte gestapelt und überlappend auf einer Palette (150) sind, umfassend:
- erste Bewegungsmittel (2) zum Befördern einer Mehrzahl von getrennten Produkten (101, 102, 103, 104) in einer Bewegungsebene (H) entlang einer ersten Richtung (A).
- Verpackungsmittel (3) zum Verpacken des Films (50) um die Produkte (101, 102, 103, 104), wenn diese gestapelt und überlappend auf einer Palette (150) sind;
- Gruppierungsmittel (4), die entworfen sind, um die Produkte (101, 102, 103, 104) von den ersten Bewegungsmitteln (2) zu empfangen und die Produkte (101, 102, 103, 104) entlang einer zweiten Richtung (B) auf der Palette (150) gestapelt und überlappend anzuordnen und beizubehalten.
- eine Stützplattform (5), die entworfen ist, um die Palette (150) zu stützen und in einer Verpackungsphase entlang der zweiten Richtung (B) bewegbar ist, um die Produkte gestapelt und überlappenden von den Gruppierungsmitteln (4) zu entfernen und davon zu lösen, um letzteren zu erlauben, von dem Film (50) verpackt zu werden, der von den Verpackungsmitteln (3) abgegeben wird.
**gekennzeichnet durch** das Merkmal, dass die Gruppierungsmittel einen Trichter (4) umfassen, der mit einem oberer Bereich (41) versehen ist, der eine obere Öffnung (43) für die Eingabe der Produkte (101, 102, 103, 104) aufweist und sich zu einem darunter liegenden unteren Bereich (42) verjüngt, wobei letzterer ein Gruppierungsvolumen (V) bildet und angeordnet ist, um die Produkte (101, 102, 103, 104) nacheinander gestapelt und überlappend entlang der zweiten Richtung (B) zu halten und zu stützen, wobei der untere Bereich (42) eine untere Öffnung (44) für die Ausgabe der Produkte (101, 102, 103, 104) aufweist, die auf der Palette (150) angeordnet sind, wobei der Trichter (4) eine Mehrzahl von Seitenwänden (6, 7) umfasst, die den oberen Bereich (41) und den unteren Bereich (42) bilden, die bewegbar sind, um das Gruppierungsvolumen (V) gemäß Dimensionen und/oder Größe und/oder Formen der Produkte (101, 102, 103, 104) und/oder Dimensionen der Palette (150) anzupassen.

2. Maschine gemäß Anspruch 1, wobei die obere Öffnung (43) des Trichters (4) im Wesentlichen koplanar zu der Bewegungsebene (H) ist.

3. Maschine gemäß Anspruch 1 oder 2, wobei die Mehrzahl von Seitenwänden (6, 7) eine Menge gegenüberliegende erste Seitenwände (6) und eine Menge gegenüberliegende zweite Seitenwände (7) enthalten, wobei insbesondere die ersten Seitenwände (6) im Wesentlichen orthogonal zu den zweiten Seitenwänden (7) sind.

4. Maschine gemäß jedem vorhergehenden Anspruch, wobei die Seitenwände (6, 7) jeweilige erste Teile (6a, 7a), die in Bezug auf die zweite Richtung (B) geneigt sind und angeordnet sind, um den oberen Bereich (41) zu bilden, und jeweilige zweite Teile (6b, 7b), die im Wesentlichen parallel zu der zweiten Richtung (B) sind und angeordnet sind, um den unteren Bereich (42) zu bilden, umfassen.

5. Maschine gemäß jedem vorhergehenden Anspruch, wobei jede Seitenwand (6, 7) an einem Stützelement (8) des Trichters (4) fixiert ist, um sich, insbesondere in einem Winkel zwischen 5° und 20°, um eine jeweilige Achse (X1, X2, X3, X4) zu drehen, wobei letztere insbesondere im Wesentlichen parallel zu der Bewegungsebene (H) ist.

6. Maschine gemäß jedem vorhergehenden Anspruch, wobei der Trichter (4) eine Mehrzahl von Paneelen (11, 12) umfasst, die mit den Seitenwänden (6, 7) des Trichters (4) an dem oberen Bereich (41) verbunden sind und zwischen einer ersten Betriebsposition (Dl), in der die Paneele (11, 12) im Wesentlichen parallel zu der Bewegungsebene (H) angeordnet sind, um einen Durchgangsabschnitt der oberen Öffnung (43) zu reduzieren, und einer zweiten Betriebsposition (D2), in der die Paneele (11, 12) benachbart und überlappend zu den jeweiligen Seitenwänden (6, 7) sind, um den Durchgangsabschnitt der oberen Öffnung (43) nicht zu reduzieren, bewegbar sind.

7. Maschine gemäß Anspruch 6, wobei jedes Paneel (11, 12) an einem Stützelement (8) des Trichters (4) fixiert ist, um sich um eine jeweilige Achse zu drehen, die insbesondere im Wesentlichen parallel zu der Bewegungsebene (H) ist.

8. Maschine gemäß jedem vorhergehenden Anspruch, wobei die Verpackungsmittel (3) angeordnet sind, um den Film (50) um einen unteren Bereich (42) der Gruppierungsmittel (4) an der unteren Öffnung (44) letzterer zu verpacken.

9. Maschine gemäß jedem vorhergehenden Anspruch, wobei die Verpackungsmittel (3) eine Abwicklungseinheit (10) umfassen, die zumindest eine Rolle des Films stützt und um eine Verpackungsachse (Z), insbesondere parallel zu der zweiten Richtung (B), durch Drehmittel (9) gestützt und gedreht wird.

10. Maschine gemäß jedem vorhergehenden Anspruch, umfassend zweite Bewegungsmittel (15), die insbesondere unter den Gruppierungsmitteln (4) positioniert sind, die angeordnet sind, um die Mehrzahl von Produkten (101, 102, 103, 104) zu empfangen, die gestapelt und überlappend auf der Palette (150) und mit dem Film (50) verpackt sind, die die Gruppierungsmittel (4) verlassen, und um die Produkte (101, 102, 103, 104), die die Maschine (1) verlassen, zu befördern.

11. Maschine gemäß jedem vorhergehenden Anspruch, wobei die zweite Richtung (B) im Wesentlichen orthogonal zu der Bewegungsebene (H) ist.

12. Verfahren zum Verpacken einer Mehrzahl von Produkten (101, 102, 103, 104) mit einem Film (50), wobei die Produkte auf einer Palette (150) gestapelt und überlappend sind, unter Verwendung einer Verpackungsmaschine (1) gemäß jedem vorhergehenden Anspruch, umfassend:
- Befördern der getrennten Produkte (101, 102, 103, 104) durch erste Bewegungsmittel (2) entlang einer ersten Richtung (A) in einer Bewegungsebene (H);
- Einführen der Produkte (101, 102, 103, 104) in Gruppierungsmittel (4);
- Anordnen und Beibehalten der Produkte (101, 102, 103, 104) gestapelt und überlappend entlang einer zweiten Richtung (B) auf einer Palette (150) mittels der Gruppierungsmittel (4);
- Bewegen der Palette (150), die von einer Stützplattform (5) gestützt wird, die entlang der zweiten Richtung (B) bewegbar ist, um die gestapelten und überlappenden Produkte (101, 102, 103, 104) von den Gruppierungsmitteln (4) nacheinander zu entfernen und davon zu lösen; und
- Verpacken der gestapelten und überlappenden Produkte (101, 102, 103, 104) mit dem Film (50) während diese nacheinander aus den Gruppierungsmitteln (4) herauskommen.

13. Verfahren gemäß Anspruch 12, wobei das Verpacken mit dem Film (50) auch ein Verpacken eines unteren Bereichs (42) der Gruppierungsmittel (4) an einer unteren Öffnung (44) davon umfasst, durch Mittel, aus denen die Produkte (101, 102, 103, 104) herauskommen, insbesondere so, dass zumindest 15% bis 35% einer Bandhöhe des Films (50) um den unteren Bereich (42) verpackt ist, um Seitenwände (6, 7) der Gruppierungsmittel (4), die an die Produkte (101, 102, 103, 104) angrenzen, beizubehalten, wobei eine Haltekraft ausgeübt wird, die im Wesentlichen durch eine Verpackungskraft des Films (50) erreicht wird.

14. Verfahren gemäß Anspruch 12 oder 13, wobei die Produkte (101, 102, 103, 104) gemäß überlappenden Schichten gestapelt sind, wobei jede Schicht zumindest ein Produkt (101, 102, 103, 104) oder zumindest eine Reihe von Produkten (101, 102, 103, 104) umfasst.

15. Verfahren gemäß Anspruch 14 umfassend, nach dem Verpacken, Platzieren der Mehrzahl von Produkten (101, 102, 103, 104), die auf der Palette (150) gestapelt und überlappend sind und mit dem Film (50) verpackt sind, auf zweiten Bewegungsmitteln (15).

## Revendications

1. Machine d'enveloppement (1) pour envelopper une pluralité de produits (101, 102, 103, 104) avec un film (50), dans laquelle les produits sont empilés et en chevauchement sur une palette (150), comprenant :
- un premier moyen de déplacement (2) pour acheminer une pluralité de produits (101, 102, 103, 104) séparés sur un plan de déplacement (H) le long d'une première direction (A),
- un moyen d'enveloppement (3) pour envelopper ledit film (50) autour desdits produits (101, 102, 103, 104), lorsqu'ils sont empilés et en chevauchement sur une palette (150) ;
- un moyen de groupement (4) conçu pour recevoir lesdits produits (101, 102, 103, 104) depuis ledit premier moyen de déplacement (2) et agencer et maintenir lesdits produits (101, 102, 103, 104) empilés et en chevauchement le long d'une seconde direction (B) sur ladite palette (150),
- une plate-forme de support (5), conçue pour supporter ladite palette (150) et déplaçable dans une phase d'enveloppement le long de ladite seconde direction (B) de façon à extraire et dégager lesdits produits dudit moyen de groupement (4) empilés et en chevauchement afin de permettre à ces derniers d'être enveloppés par le film (50) distribué par le moyen d'enveloppement (3),
**caractérisée par le fait que** ledit moyen de groupement comprend une trémie (4) pourvue d'une portion supérieure (41), ayant une ouverture supérieure (43) pour l'entrée desdits produits (101, 102, 103, 104) et convergeant vers une portion inférieure sous-jacente (42), cette dernière formant un volume de groupement (V) et agencée pour contenir et supporter lesdits produits (101, 102, 103, 104) progressivement empilés et en chevauchement le long de ladite seconde direction (B), ladite portion inférieure (42) ayant une ouverture inférieure (44) pour la sortie desdits produits (101, 102, 103, 104) agencés sur ladite palette (150), ladite trémie (4) comprenant une pluralité de parois de côté (6, 7), formant ladite portion supérieure (41) et ladite portion inférieure (42), qui sont déplaçables pour ajuster ledit volume de groupement (V) selon des dimensions et/ou une taille et/ou des formes desdits produits (101, 102, 103, 104) et/ou des dimensions de ladite palette (150).

2. Machine selon la revendication 1, dans laquelle ladite ouverture supérieure (43) de ladite trémie (4) est sensiblement coplanaire audit plan de déplacement (H).

3. Machine selon la revendication 1 ou 2, dans laquelle ladite pluralité de parois de côté (6, 7) comportent un couple de premières parois de côté (6) opposées et un couple de secondes parois de côté (7) opposées, en particulier lesdites premières parois de côté (6) étant sensiblement orthogonales auxdites secondes parois de côté (7).

4. Machine selon l'une quelconque des revendications précédentes, dans laquelle lesdites parois de côté (6, 7) comprennent des premières parties (6a, 7a) respectives qui sont inclinées par rapport à ladite seconde direction (B) et agencées pour former ladite portion supérieure (41) et des secondes parties (6b, 7b) respectives qui sont sensiblement parallèles à ladite seconde direction (B) et agencées pour former ladite portion inférieure (42).

5. Machine selon l'une quelconque des revendications précédentes, dans laquelle chaque paroi de côté (6, 7) est fixée à un élément de support (8) de ladite trémie (4) afin de tourner, particulièrement d'un angle entre 5° et 20°, autour d'un axe (X1, X2, X3, X4) respectif, ce dernier étant en particulier sensiblement parallèle audit plan de déplacement (H).

6. Machine selon l'une quelconque des revendications précédentes, dans laquelle ladite trémie (4) comprend une pluralité de panneaux (11, 12) qui sont reliés auxdites parois de côté (6, 7) de ladite trémie (4) au niveau de ladite portion supérieure (41) et déplaçables entre une première position de fonctionnement (Dl), dans laquelle lesdits panneaux (11, 12) sont agencés sensiblement parallèles audit plan de déplacement (H) afin de réduire une section de passage de ladite ouverture supérieure (43), et une seconde position de fonctionnement (D2), dans laquelle lesdits panneaux (11, 12) sont adjacents auxdites parois de côté (6, 7) respectives et en chevauchement sur celles-ci de façon à ne pas réduire ladite section de passage de ladite ouverture supérieure (43).

7. Machine selon la revendication 6, dans laquelle chaque panneau (11, 12) est fixé à un élément de support (8) de ladite trémie (4) afin de tourner autour d'un axe respectif, qui est en particulier sensiblement parallèle audit plan de déplacement (H).

8. Machine selon l'une quelconque des revendications précédentes, dans laquelle ledit moyen d'enveloppement (3) est agencé pour envelopper ledit film (50) autour d'une portion inférieure (42) dudit moyen de groupement (4) au niveau de ladite ouverture inférieure (44) de ce dernier.

9. Machine selon l'une quelconque des revendications précédentes, dans laquelle ledit moyen d'enveloppement (3) comprend une unité de dévidage (10) qui supporte au moins un rouleau (51) dudit film et est supportée et mise en rotation autour d'un axe d'enveloppement (Z), en particulier parallèle à ladite seconde direction (B), par un moyen de mise en rotation (9).

10. Machine selon l'une quelconque des revendications précédentes, comprenant un second moyen de déplacement (15), en particulier positionné sous ledit moyen de groupement (4), agencé pour recevoir ladite pluralité de produits (101, 102, 103, 104), empilés et en chevauchement sur ladite palette (150) et enveloppés avec ledit film (50) quittant ledit moyen de groupement (4) et acheminer lesdits produits (101, 102, 103, 104) quittant ladite machine (1).

11. Machine selon l'une quelconque des revendications précédentes, dans laquelle ladite seconde direction (B) est sensiblement orthogonale audit plan de déplacement (H).

12. Procédé d'enveloppement d'une pluralité de produits (101, 102, 103, 104) avec un film (50), dans lequel les produits sont empilés et en chevauchement sur une palette (150), en utilisant une machine d'enveloppement (1) selon l'une quelconque des revendications précédentes, comprenant :
- l'acheminement desdits produits (101, 102, 103, 104) séparés par un premier moyen de déplacement (2) le long d'une première direction (A) sur un plan de déplacement (H) ;
- l'introduction desdits produits (101, 102, 103, 104) dans un moyen de regroupement (4) ;
- l'agencement et le maintien desdits produits (101, 102, 103, 104) empilés et en chevauchement le long d'une seconde direction (B) sur une palette (150) au moyen dudit moyen de groupement (4) ;
- le déplacement de ladite palette (150) supportée par une plate-forme de support (5), qui est déplaçable le long de ladite seconde direction (B), de façon à extraire progressivement et dégager lesdits produits (101, 102, 103, 104) empilés et en chevauchement dudit moyen de groupement (4) ; et
- l'enveloppement desdits produits (101, 102, 103, 104) empilés et en chevauchement avec ledit film (50) tandis qu'ils sortent progressivement du moyen de groupement (4).

13. Procédé selon la revendication 12, dans lequel ledit enveloppement avec ledit film (50) comprend l'enveloppement également d'une portion inférieure (42) dudit moyen de groupement (4) au niveau d'une ouverture inférieure (44) de celui-ci, au moyen de laquelle lesdits produits (101, 102, 103, 104) sortent, en particulier de sorte qu'au moins 15 % à 35 % de hauteur de bande dudit film (50) soient enveloppés autour de ladite portion inférieure (42) afin de maintenir des parois de côté (6, 7) dudit moyen de groupement (4) en butée avec lesdits produits (101, 102, 103, 104), exerçant une force de retenue qui est sensiblement accomplie par une force d'enveloppement dudit film (50).

14. Procédé selon la revendication 12 ou 13, dans lequel lesdits produits (101, 102, 103, 104) sont empilés selon des couches en chevauchement, chaque couche comprenant au moins un produit (101, 102, 103, 104) ou au moins une rangée de produits (101, 102, 103, 104).

15. Procédé selon la revendication 14, comprenant, après ledit enveloppement, la mise en place de ladite pluralité de produits (101, 102, 103, 104), qui sont empilés et en chevauchement sur ladite palette (150) et enveloppés avec ledit film (50), sur un second moyen de déplacement (15).
